Europäisches Patentamt

European Patent Office

Office européen des brevets

(19)

(11) Publication number: **0 233 962**
**B1**

# EUROPEAN PATENT SPECIFICATION

(45) Date of publication of the patent specification:
26.09.90

(51) Int. Cl.⁵: **A23L 1/01**

(21) Application number: **86101857.0**

(22) Date of filing: **13.02.86**

(54) Method for producing dry edible product by using heated oil.

(43) Date of publication of application:
02.09.87 Bulletin 87/36

(45) Publication of the grant of the patent:
26.09.90 Bulletin 90/39

(84) Designated Contracting States:
CH DE FR GB IT LI SE

(56) References cited:
PATENTS ABSTRACTS OF JAPAN, vol. 9,
no. 233(C-304)[1956], 19th September 1985; &
JP-A-60 91 949 (SHIYUUZOU NAKAZONO) 23-05-1985
PATENTS ABSTRACTS OF JAPAN, vol. 7,
no. 289 (C-202)[1434], 23rd December 1983; &
JP-A-58 170 442 (FUJIKAME K.K.) 07-10-1983
PATENTS ABSTRACTS OF JAPAN, vol. 9,
no. 45 (C-268)[1768], 26th February 1985; &
JP-A-59 187 750 (AKIJI KOTANI) 24-10-1984

(73) Proprietor: Nakazono, Shuzo, 4-2, Arato 3-chome,
Chuo-ku Fukuoka(JP)

(72) Inventor: Nakazono, Shuzo, 4-2, Arato 3-chome,
Chuo-ku Fukuoka(JP)

(74) Representative: Henkel, Feiler, Hänzel & Partner,
Möhlstrasse 37, D-8000 München 80(DE)

ACTORUM AG

## Description

### Background of the Invention

Conventionally, there have been developed various methods for producing dry edible products from meat, internal organs, animal bones, fish or vegetable and these dry edible products are eaten in the original shape or pulverized into a powdery form and are utilized as fillers added to foods, components of nutritious agents, or coloring agents.

In these methods, however, during the grinding process or heating process, the valuable components such as vitamines, proteins, and calcium contained in the raw material are destroyed and final products contain no such valuable components.

Although the dry-freezing method may be able to maintain the valuable components to some extent in the final products, the method requires an extremely expensive installation or equipment.

Accordingly, it is an object of the present invention to provide a method which can easily produce the dry edible products which are rich in valuable components such as vitamines from the raw material such as meat, internal organs, animal bones, fish, or vegetables.

### Summary of Invention

For achieving the above object, in the present invention, the raw material is processed such that animal or vegetable oil is heated in the cooker, the raw material preliminarily heated with steam is fed into the heated oil, the cooker is subjected to two sequential reductions of inner pressure, namely first at a low reduced pressure and subsequently at a high reduced pressure, and the oil is extracted from the raw material also in the high reduced atmosphere by squeezing so as to produce dry edible product. When the squeezing is effected by centrifuge, the dry edible product can maintain the original shape of the raw material and when the squeezing is carried out by pulverizing screw, the dry edible product in a powdery form can be obtained. Such dry edible product in either original shape or in the powdery form has no odor, a good taste and contains a considerable amount of valuable components such as protein and calcium. And, the dry edible product in powdery form can be used as filler added to all kinds of food products, as coloring agents, as nutritious agents or as components of medicines.

### Brief Explanation of Drawings

Fig. 1 is an elevational view of the apparatus with a part broken away of the apparatus employed for carrying out the method of the present invention.

Fig. 2 is an enlarged partial view of the apparatus of Fig. 1.

Fig. 3 is a cross-sectional view of the apparatus taken along the line I–I of Fig.2.

### Detailed Description of Preferred Embodiments

The method of the present invention for producing dry edible product is explained in detail in conjunction with attached drawings.

Firstly, the construction of the apparatus for carrying out of the present invention is disclosed.

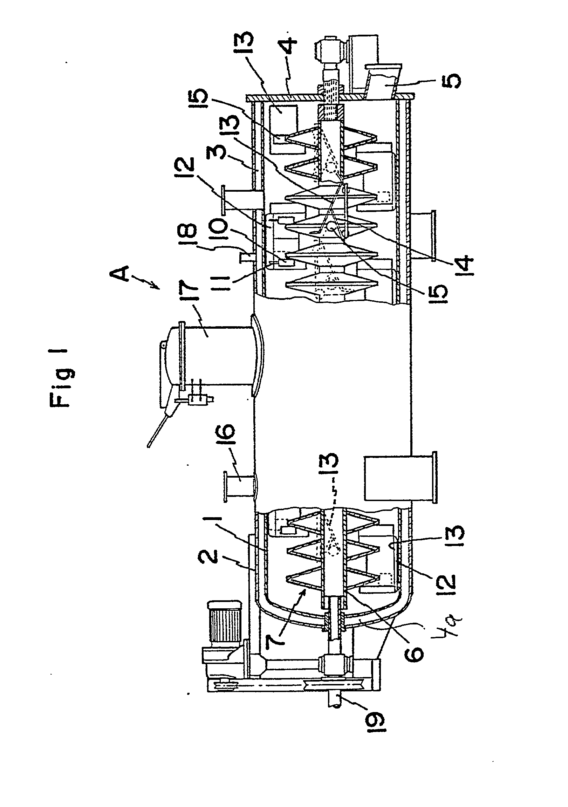

In Fig. 1, A indicates an apparatus which substantially is made of an elongated horizontal steam drum which works as a cooker. The steam drum comprises a pair of concentric inner and outer tubes 1, 2 which define an annular steam space 3 therebetween.

End plates 4, 4a are provided at both ends of the steam drum for rotatably receiving the both ends of an elongated rotary shaft 6 which passes through in the steam drum.

The steam drum is provided with a raw-material feeding opening 16 and a product take-out opening 5 at the upper and lower surface thereof which are communicated with the inside of the inner tube 1.

The steam drum is further provided with a manhole 17 which has one end connected with the inside of the inner drum 1 and the other end connected with a vacuum device for reducing the pressure inside the inner drum 1.

Numeral 18 indicates a steam supply opening formed on the outer tube 2 for supplying the steam to the annular steam space 3, while numeral 19 indicates a steam supply opening formed on the outlet of the elongated hollow rotary shaft 6.

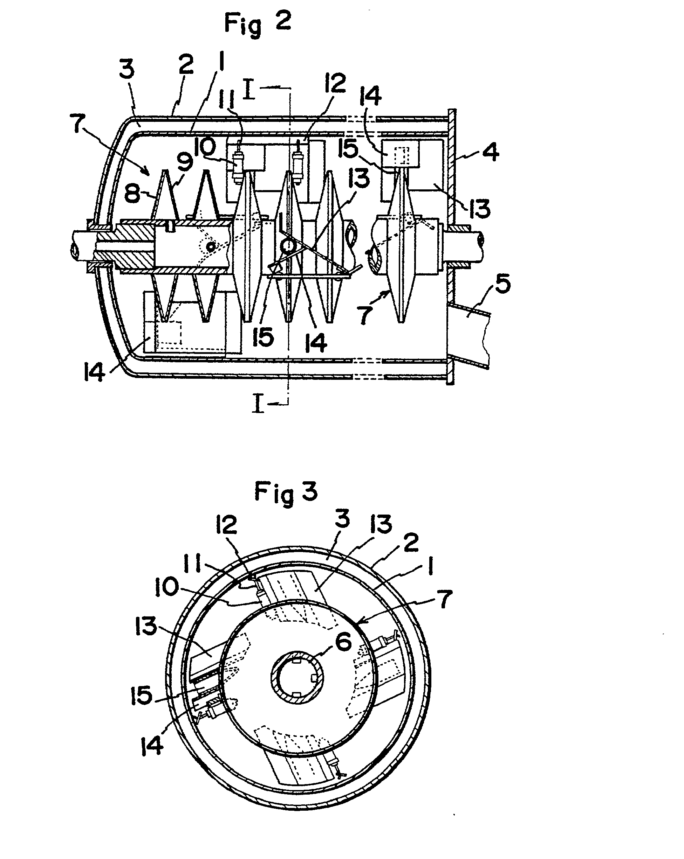

A plurality of hollow circular discs 7 are mounted an the outersurface of the hollow elongated rotary shaft 6 in an axially-spaced-apart manner and each hollow circular disc 7 consists of a pair of opposed conical disc plates 8,9. As can be understood from Fig. 2 and Fig. 3, a support strut 15 has the proximal end thereof fixedly connected to the outer surface of the hollow circular disc 7 and such support strut 15 extends in a radial direction.

An agitating plate 13 is connected to the support strut 15 by means of a connecting plate 14 for agitating the raw material charged into the inside of the inner tube 1.

A cylindrical tube 10 which extends outwardly and radially is secured to the agitating plate 13 or the connecting plate 14 and such tube 10 encases a scraper-mounting shaft 11 which extends outwardly from and retract to the inside of the tube 10 against the spring contained in the tube 10.

A scraper plate 12 is fixedly secured to the extremity of the scraper-mounting shaft 11 for scraping the residue of the raw material fixed to the inner surface of the inner tube 1.

The manner in which the method of this invention is carried out with the above-mentioned apparatus is explained hereinafter.

[First Embodiment]

An animal or vegetable oil is fed into an air-tight inner tube 1 having a capacity of 4.5 m³.

The animal oil may be sardine oil, tallow or greese, while the vegetable oil may be rapeseed oil or corn oil. The amount of animal or vegetable oil charged into the inner drum 1 is 900 kg.

Subsequently, the pressurized steam is supplied to the annular steam space 6 of the steam drum to heat the animal or vegetable oil to a temperature of more than 80°C and less than 150°C.

Then, 3000 kg of the raw material is charged into the heated animal or vegetable oil in the steam drum 1.

The raw material comprises meat, internal organs, bones of animals such as cows, horses or pigs or those of fish.

The raw material is preliminarily boiled with steam before being charged into the inner tube 1 of the steam drum.

The juice is also charged into the animal or vegetable oil in the steam drum along with the raw material.

Since the raw material is pre-boiled with steam, the tissue of the raw material is softened, and the efficiency of the thermal dehydration is enhanced. Furthermore, the watersoluble protein and gelatine which are contained in the raw material are coagulated, thus facilitating the ensuing oilremoving and pulverizing operations.

After charging the raw material into the steam drum in the above manner, the drum is colsed airtight, and the raw material is agitated together with the pre-heated animal or vegetable oil in the inner tube 1 for about 30 minutes after charging the raw material into the inner drum 1, the pressure in the inner tube 1 is reduced to -10 to 20 mmHg (i.e. 750–740mmHg (998–984mbar)) and thereafter the pressure is reduced to –740 to 750 mmHg (i.e. 20–10mmHg (27–13 mbar)).

About 3 hours after charging the raw material into the steam drum, the raw material is taken out together with the oil from the product exit 5 of the bottom of the steam drum which is preferably held under a reduced pressure of –740~750 mmHG (i.e. 20–10mmHg (27–13mbar)).

Subsequently, the animal or vegetable oil is squeezed from the raw by any conventional squeezing means such as a centrifuge or a mechanical pulverizing screw feeder under a reduced pressure condition of –740~750mmHg (i.e. 20–10 mmHg (27–13 mbar)).

The raw material after the above squeezing operation contains only 20% of oil and 6% of moisture. This means that the raw material is processed almost to a dry state.

In the above squeezing operation, when the squeezing is effected by a centrifuge, the dry edible product can maintain the original shape of the raw material and when the squeezing is carried out by the pulverizing screw, the dry edible product in a powdery form can be obtained.

Such dry edible product in either original shape or in the powdery form has no odor, a good taste and contains a considerable amount of valuable components such as protein and calcium. And, the dry edible product in powdery form can be used as filler added in all kinds of food products, or used as coloring agents, or nutritious agents or components of medicine.

If the amount of oil is to be further reduced to 20 %, the organic solution such as normal-hexane is added to the dry edible products and the oil component is evaporated together with the normal-hexane thus reducing the oil component to 6%.

To recapitulate the above embodiment, the raw material is preliminarily boiled with steam to that the water-soluble protein and the gelatinous substance is coagulated to some degree.

The raw material is dehydrated to moisture a content of about 50 to 60%. This dehydrated raw material is subjected to the pressure reducing operation at two stages while heated by the heat of the oil in the cooker.

In the first pressure-reducing operation, the water-soluble protein and the gelatinous substance are completely coagulated thus preventing the dissolving and flowing out of the protein and gelatinous substance into the oil.

In the ensuing pressure-reducing operation, the pressure is further reduced to render the specific gravity of moisture contained in the tissue of the raw material lower than that of the animal or vegetable oil.

Accordingly, the moisture and the oil in the tissue of the raw material is displaced providing the uniform and fast evaporation of the moisture throughout the portions of the raw material. This prevents the protein and the calcium contained in the raw material from carbonization.

Subsequently, the oil is squeezed from the raw material in the pressure reduced atmosphere so that the oil infiltrated into the raw material in the steam drum is separated from the air thus preventing the oxidation of the oil as well as the adherence of the odor to the raw material. Furthermore, the squeezing under the reduced pressure enables the prompt and easy extraction of the oil which has penetrated into the core of the tissue of the raw material.

The product produced in the above method contains protein and calcium of high quality end exhibits either an original shape of the raw material or a powdery form.

Furthermore, the product is free from the smell of the oil or the odor and shows the low hygroscopic property. Still furthermore, the product shows a low oil content as well as a low moisture content so that, even when the product is stored for a long period, the contained oil is not oxidized and does not absorb the moisture in the air.

When vegetable oil is used as the oil in the cooker, the taste of the vegetable oil is added to the dry edible product. For example, when the taste of corn is to be added to the dry edible product, corn oil is fed into the steam drum.

In the above embodiment, vegetables can be added to the meat, internal organs or animal bones or fish as a part of the raw material to provide a suitable color to the dry edible product since the pigment of the vegetables remains in the dry edible product even after the treatment with the heated oil.

For example, for coloring the dry edible product, it is preferable to use following vegetables along with other raw materials. Namely, red pepper provides a reddish color to the final products, Chinese cabbage provide a whitish color to the final products, spinach provides a greenish color to the final products and pumpkin provides a yellowish color to the final products.

Still furthermore, in the above experiment, some of the pigment contained in the meat of the animal or fish dissolves during heating in the oil and such pigment can be easily recovered or collected by any conventional methods and used as a coloring agent.

[Second Embodiment]

The raw material which comprises the vegetables exclusively is processed almost in the same manner as the the abovementioned raw material which comprises meat, internal organ, animal bones or fish, provided that the temperature of the heated oil is to be held between 60 to 90 °C and the second reduced condition is to be continued to about 60 minutes.

In this embodiment, vegetables mean not only vegetables per se but also fruits such as apples, bananas or oranges.

## Claims

1. Method for producing dry edible products by using heated oil comprising:

a) preliminarily treating a raw material such as meat, internal organs, bones or skins of animal, fish or vegetables with steam for softening the tissue of said raw materials,

b) charging said raw material into an animal or vegetable oil contained in a cooker and preheated to a temperature of more than 80°c to 150°c,

c) heating said raw material with said animal or vegetable oil in said cooker under a low reduced pressure of -10 to -20 mm Hg (i.e. 750-740 mm Hg(998-984 mbar),

d) continuing said heating in said cooker under a high reduced pressure of -740 to -750 mm Hg and

e) squeezing oil from said raw material to produce said dry edible product under a high reduced pressure of -740 to -750 mm Hg (i.e. 20-10 mm Hg (27-13 mbar mbar)).

2. Method for producing dry edible product according to claim 1, wherein an organic solvent is added to said dry edible product and the oil components contained in said dry edible product are evaporated with said organic solvent.

## Revendications

1. Procédé de préparation de produits alimentaires secs en utilisant de l'huile chaude, consistant à:

a) traiter préalablement une matière première comme de la viande, des organes internes, os ou peaux d'un animal, poisson ou légumes avec de la vapeur pour ramollir le tissu de ladite matière première,

b) introduire ladite matière première dans une huile animale ou végétale contenue dans un appareil de cuisson, et précilauffée à une température plus haute que 80°c à 150°c,

c) chauffer ladite matière première avec ladite huile animale OU végétale dans ledit appareil de cuisson sous une pression faiblement réduite de -10 à -20 mm Hg (c'est-à-dire 750-740 mm Hg (998-984 mbars), ,

d) poursuivre ledit chauffage dans ledit appareil de cuisson sous une pression fortement réduite de -740 à -750 Hg (c'est-à-dire 20 -10 mm Hg (27-13 mbars))

e) expulser l'huile de ladite matière première pour produire ledit produit alimentaire sec sous une pression fortement réduite de -740 à -750 Hg (c'est-à-dire 20-10 mm Hg (27-13 mbars)).

2. Procédé de préparation d'un produit alimentaire sec selon la revendication 1, dans lequel un solvant organique est ajouté audit produit alimentaire sec et les composants d'huile contenus dans ledit produit alimentaire sec sont évaporés avec ledit solvant organique.

## Patentansprüche

1. Verfahren zur Herstellung trockener eßbarer Produkte unter Verwendung von erwärmten Öl durch

a) Vorbehandeln eines Rohmaterials, wie Fleisch, innere Organe, Knochen oder Haut von Tieren, Fischen oder Pflanzen, mit Dampf zum Weichmachen des Gewebes der betreffenden Rohmaterialien,

b) Eintragen des Rohmaterials in ein in einem Kocher befindliches und auf eine Temperatur von mehr als 80°C bis 150°C vorgewärmtes tierisches oder pflanzliches Öl,

c) Erwärmen des Rohmaterials mit dem tierischen oder pflanzlichen Öl in dem Kocher unter einem um -10 bis -20 mm Hg niedriger reduzierten Druck (d. h. 750 - 740 mm Hg (998 - 984 mbar)),

d) Weitererwärmen in dem Kocher unter einem um -740 bis -750 mm Hg höher reduzierten Druck (d. h. 20 - 10 mm Hg (27 - 13 mbar)) und

e) Abquetschen von öl aus dem Rohmaterial zur Gewinnung des trockenen eßbaren Produkts unter einem um -740 bis -750 mm Hg höher reduzierten Druck (d.h. 20 - 10 mm Hg (27 - 13 mbar)).

2. Verfahren zur Herstellung eines trockenen eßbaren Produkts nach Anspruch 1, bei welchem dem trockenen eßbaren Produkt ein organisches Lösungsmittel zugesetzt und die in dem trockenen eßbaren Produkt (noch) vorhandenen Ölkomponenten zusammen mit dem organischen Lösungsmittel verdampft werden.

Fig 1

EP 0 233 962 B1

# Fig 2

# Fig 3